# EUROPEAN PATENT APPLICATION

(11) **EP 1 214 976 A1**
(43) Date of publication of application: **19.06.2002**
(21) Application number: 01204715.5
(22) Date of filing: 06.12.2001
(51) Int. Cl.: B01J 37/08, B01J 37/02, B01D 53/94, F01N 3/28

(54) **Nitrogen oxide removal catalyst**

(30) Priority: 15.12.2000 US 737304
(71) Applicant: Delphi Technologies, Inc., Troy, MI 48007 (US)
(72) Inventor: Hemingway, Mark David, Columbiaville, MI 48421 (US); Kupe, Joachim, Davisburg, MI 48350 (US); Fisher, Galen Bruce, Bloomfield Hills, MI 48301 (US); Labarge, William J., Bay City, MI 48706 (US)
(74) Representative: Denton, Michael John

(57) **Abstract**

An improved nitrogen oxide catalyst for use with catalytic converters (10) comprises a substrate material comprising a catalyst, an adsorption material layer, and an organometallic precursor comprising an organometallic precursor material and a nitrogen oxide adsorber catalyst material. The organometallic precursor reacts with a base metal oxide present in the catalyst and decomposes upon application to the substrate material, leaving a nitrogen oxide adsorption catalyst material in the adsorption material layer.

## Description

### TECHNICAL FIELD

This disclosure relates to catalytic converters, and, more particularly, to catalyst substrates for catalytic converters.

### BACKGROUND

Noble metal-containing zeolites have been described for the catalysis of a variety of chemical conversion processes, e.g., hydroisomerization, disproportionation, hydrocracking, reforming, and the like. When an aged zeolite catalyst is oxidatively regenerated to burn off accumulated carbonaceous deposits, or "coke", there is a tendency for the noble metal to migrate from the zeolite channels and to agglomerate in larger particles. This reduces the dispersion and the surface area of the noble metal available for contacting the reactants. To remedy this problem a process referred to as rejuvenation is employed in which a source of halogen such as chlorine is used to redisperse the noble metal. Frequently, chlorine rejuvenation makes matters worse, and the noble metal migrates from the zeolite to the binder material which is associated with the zeolite. When the noble metal hydrogenation component is far removed from the active acid sites of the zeolite framework, the catalyst loses selectivity. Fresh catalyst performance is rarely, if ever, obtained after current rejuvenation processes.

United States Patent No. 5,384,296, to Tsao, discloses a zeolite catalyst composition resistant to agglomeration of its noble metal component by adding a non-framework alumina and optionally, one or more non-framework multivalent metal oxides other than alumina, within the channels of the zeolite and a catalytically effective amount of one or more noble metals. The zeolite component having an initial Al₂O₃ content of at least 1 weight percent is calcined at a temperature of 600°C, in an oxygen-containing atmosphere containing about 10 to 100 torr water for more than one hour. The calcination introduces a non-framework alumina component into the zeolite component. A noble metal component is then introduced into the zeolite component.

One drawback associated with the aforementioned method and zeolite catalyst is the temperature at which calcinations is achieved. High calcination operating temperatures lead to noble metal depositions on the zeolite that has large particle sizes. When exposing these noble metals having larger particle sizes to catalytic converter operating temperatures of up to about 1,000°C, the larger particles sizes tend to migrate together and undergo agglomeration under such high temperatures.

Furthermore, when employing a noble metal component in the non-framework alumina structure proposed by Tsao, the metal nitrate that forms on the catalyst substrate surface typically covers a surface area of approximately 250 m²/g. A catalyst substrate having such a small surface area covered with catalytically active material cannot afford to undergo agglomeration, unless it is understood that the catalyst substrate must be frequently replaced.

Consequently, there exists a need to develop a catalyst coating having improved durability and resistance to agglomeration.

### SUMMARY

The drawbacks and disadvantages of the prior art are overcome by the catalyst substrate, method for manufacturing a catalyst substrate, catalytic converter, and method for treating exhaust gas described herein. The catalyst substrate comprises a substrate material comprising a catalyst, an adsorption material layer, and an organometallic precursor layer. The catalyst, adsorption material layer, and organometallic precursor are disposed on the substrate material. The method for manufacturing the catalyst substrate comprises forming the substrate, and applying a catalyst, an adsorption material layer, and an organometallic precursor layer upon the substrate.

The catalytic converter comprises a mat material concentrically disposed around a catalyst substrate, and between the catalyst substrate and a shell. The catalyst substrate comprises a catalyst, and an organometallic precursor disposed in an adsorption material. The shell is concentrically disposed about the catalyst substrate. The method for treating exhaust gas comprises introducing and passing exhaust gas through a catalytic converter assembly. The catalytic converter assembly comprises a shell concentrically disposed about a mat support material, which is concentrically disposed about a catalyst substrate comprising a catalyst, an adsorption material, and an organometallic precursor. One or more constituents in the exhaust gas are catalytically treated by the catalyst substrate.

### BRIEF DESCRIPTION OF THE DRAWINGS

Referring now to the Figure, which is meant to be exemplary, and not limiting, and wherein like elements are numbered alike in the figure.

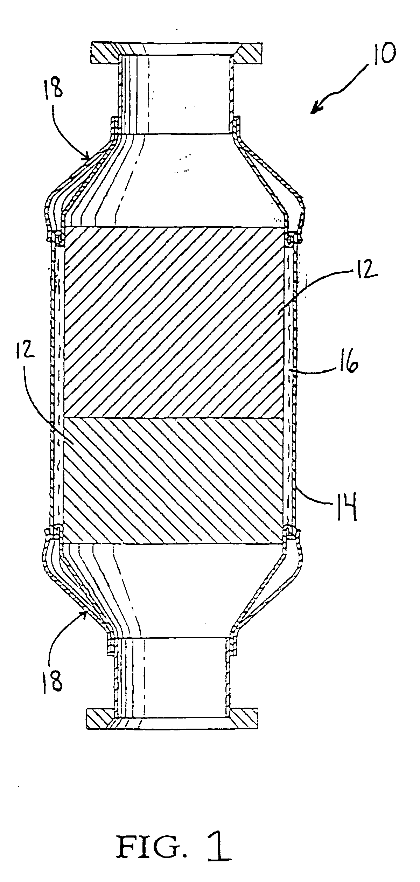

Figure 1 is a cross-sectional view of a catalytic converter employing the exemplary catalyst substrate.

### DESCRIPTION OF THE PREFERRED EMBODIMENT

To prevent the agglomeration of catalyst material on a catalyst substrate at high operating temperatures in an exhaust system, a catalyst substrate comprises a catalyst, a layer of an adsorption material, and a layer of an organometallic precursor. The adsorption material layer and/or organometallic precursor layer covers the entirety, or a substantial portion of the catalyst substrate's surface area. The organometallic precursor comprises an organometallic precursor material and nitrogen oxide adsorbing catalyst material. The resulting catalyst substrate can efficiently catalyze hydrocarbons, nitrogen oxides, and other constituents present in the exhaust gas.

A catalytic converter for a mobile vehicle can catalytically treat exhaust gas streams using a catalyst disposed on a catalyst substrate. The catalyst substrate can comprise any material designed for use in a spark ignition or diesel engine environment and having the following characteristics: (1) capable of operating at temperatures up to about 1,000°C; (2) capable of withstanding exposure to hydrocarbons, nitrogen oxides, carbon monoxide, carbon dioxide, and/or sulfur; and (3) having sufficient surface area and structural integrity to support the desired catalyst. Some possible materials include cordierite, silicon carbide, metallic foils, alumina sponges, porous glasses, and the like, and mixtures comprising at least one of the foregoing. Some ceramic materials include "HONEY CERAM", commercially available from NGK-Locke, Inc, Southfield, Michigan, and "CELCOR", commercially available from Corning, Inc., Corning, New York.

Although the catalyst substrate can have any size or geometry, the size and geometry are preferably chosen to optimize the surface area in the given converter design parameters. Typically, the catalyst substrate has a honeycomb cell geometry, with the cells being any multi-sided or rounded shape, with substantially square, hexagonal, octagonal or similar geometries preferred due to ease of manufacturing and increased surface area.

Preferably disposed underneath or on top of the catalyst layer and/or throughout the catalyst substrate, can be an adsorption material layer for adsorbing hydrocarbons, steam, and other combustion by-products, in the exhaust gas stream. The adsorption material comprises one or more adsorption materials that are wash coated, imbibed, impregnated, physisorbed, chemisorbed, precipitated, or otherwise applied to the catalyst layer, and/or the catalyst substrate. Possible adsorption materials include zeolites, such as Beta, fjiusites such as Y, FERIERITE (also known as FER), MFI (also known as "ZSM-5"), and "LZ-210" which is commercially available from UOP, Inc., and/or a large pore zeolite such as zeolite Y, rare-earth-exchanged zeolite Y, ultra stable zeolite Y, de-aluminated zeolite Y, zeolite L, zeolite beta, ZSM-3, ZSM-4, ZSM-18, ZSM-20, a medium pore zeolite such as ZSM-12, ZSM-23, ZSM-35, ZSM-38, ZSM48, zeolite MCM-22, 13X zeolite powder commercially available from PQ Corporation, Beryn, Pennsylvania, CBV-100 zeolite powder commercially available from Zeolyst International, or other similar material, as well as inorganic oxides such as alumina (e.g., SCFA 100 gamma-alumina commercially available from Condea Vista, Houston, Texas), and the like; and mixtures comprising at least one of the foregoing materials, and other conventional adsorption materials.

Zeolites are preferably capable of retaining their hydrocarbon adsorption capacity after being exposed to the exhaust gas components under temperatures of about -40°C to about 1000°C for about 100,000 miles or more. The zeolite layer can preferably adsorb hydrocarbons from the exhaust gas stream at temperatures of about 200°C to about 1,000°C depending upon how far away the catalytic converter is placed from the engine compartment. Typically, zeolites adsorb water at temperatures of about 90° C and below, which typically characterizes cold start conditions. Cold start conditions refer to when the catalytic converter is not operating. For example, this could be on a cold winter day when the temperature is -40°C or on a summer day when the ambient temperature is 30°C. The catalytic converter must be heated to about 250°C before it can convert the combustion by-products of the internal combustion engine. Zeolites preferably have the following characteristics: (1) capable of adsorbing hydrocarbon preferentially over water when exposed to exhaust gas streams at temperatures under cold start conditions to about 1,000°C; (2) preferably have a heat of adsorption value of at least about 9.5 kcal per gram-mol. of hydrocarbon at about 150°C; (3) capable of withstanding accelerated aging conditions, such as exposing a zeolite coated substrate to temperatures up to about 910°C for at least about 50 hours on an engine dynamometer, while still retaining both its adsorption properties at temperatures up to about 850°C and its structural integrity at temperatures up to about 980°C; and (4) preferably does not dust, flake or spall once mixed with an inorganic binder and applied on a catalyst substrate as a coating.

The relative proportions of zeolite can vary widely with the zeolite content of about 40 to about 80 weight percent of the catalyst washcoat mixture, and preferably of about 70 to about 80 weight percent for catalyzed adsorbers made by mixing the zeolite and washcoat together before application to the catalyst substrate, and preferably about 40 to about 60 weight percent for catalyzed adsorbers made by preferably layering the zeolite on top of the washcoat containing the catalyst material.

Disposed on and/or throughout the catalyst substrate can be a catalyst washcoat layer for converting exhaust gases to acceptable emissions levels as is known in the art. The catalyst may comprise one or more catalyst materials that are wash coated, imbibed, impregnated, physisorbed, chemisorbed, precipitated, or otherwise applied to the catalyst substrate. Possible catalyst materials include metals, such as platinum, palladium, rhodium, iridium, osmium, ruthenium, tantalum, zirconium, yttrium, cerium, nickel, copper, and the like, as well as oxides, mixtures, and alloys comprising at least one of the foregoing metals, and other conventional catalysts.

The catalyst washcoat can also preferably include an organometallic precursor. Possible materials for the organometallic precursor include napthalenes, tallates, neodecanates, isopropoxides, carboxylic acids and their esters, carboxylates, alkoxycarboxylates, phthalates, alcohols such 2-methoxyethanol, guanidine, fatty acids, and combinations comprising at least one of the foregoing metals. Possible carboxylic acids include stearic, oleic, linolenic, hexanoic, octanoic, neodecanoic, and the like, as well as their respective esters, with hexanoates, octanoates, neodecanoates preferred, and with 2-ethyl hexanoates, 2-ethyl octanoates, and neodecanoates most preferred. The organometallic precursor also comprises a catalyst that adsorbs nitrogen oxides. Possible nitrogen oxide catalysts include noble metals, rare earth metals, alkaline earth metals, transition metals, and combinations comprising at least one of the foregoing catalysts; with silver, barium, and combinations comprising either or both silver and barium preferred.

The organometallic precursor can be supported on the adsorption material layer comprising either or both alumina and zeolite. For example, the silver metal can preferably deposited upon the adsorption layer using either silver 2-ethylhexanoate or silver neodecanoate in an organic solution. Both silver 2-ethylhexanoate and silver neodecanoate can be used as a carrier to finely deposit a quantity of silver metal having a particle size of less than about 50 nanometers, and preferably less than about 25 nanometers, and most preferably less than about 15 nanometers, and less than about 10 nanometers especially preferred, on the adsorption material layer. Furthermore, another example includes depositing barium metal upon the adsorption material layer using either barium 2-ethyl hexanoate or barium neodecanoate in an organic solution. Both barium 2-ethyl hexanoate and barium neodecanoate can be used as a carrier to finely deposit a quantity of barium metal having a particle size of less than about 50 nanometers, and preferably less than about 25 nanometers, and most preferably less than about 15 nanometers, and less than about 10 nanometers especially preferred, on the adsorption material layer.

The organometallic precursor can be wash coated, imbibed, impregnated, physisorbed, chemisorbed, precipitated, or otherwise applied to an entire or substantial portion of the catalyst substrate surface coated with the adsorption material layer. In the alternative, the organometallic precursor can be mixed with the adsorption material, and can then be wash coated, imbibed, impregnated, physisorbed, chemisorbed, precipitated, or otherwise applied to an entire or substantial portion of the catalyst substrate surface, such that the catalyst substrate can be coated with an adsorption material layer containing either or both silver and barium metal in a single step. The organometallic precursor can preferably be applied under alkaline reaction conditions using any one of or a combination of the foregoing application methods. Under acidic reaction conditions the catalyst materials, e.g., catalyst washcoat and nitrogen oxide catalyst materials, dissolve and cannot be applied to either the catalyst substrate or the adsorption material layer. Once applied, the organometallic precursor can react with metal oxides present in the catalyst washcoat, and decompose. The resulting adsorption material layer becomes impregnated with the organometallic precursor. The resulting layer(s) can comprise, for example, a uniformly distributed layer of silver or barium metal particles disposed on the adsorption material layer. The resulting adsorption material and organometallic precursor layers can preferably be formed on a substantial portion or the entirety of the catalyst substrate's surface.

More specifically, the organometallic precursor can preferably be applied to the catalyst substrate to form a dual layer scheme having a first layer comprising silver or barium disposed within an adsorption material layer, and a second layer comprising barium or silver, respectively, disposed within a second adsorption material layer. For example, an organometallic precursor comprising an organometallic precursor material including either silver or barium metal can be mixed with an adsorption material such as alumina or zeolite. The resulting mixture of adsorption material and organometallic precursor material can be filtered, washed and calcined. The resulting calcined mixture can be mixed with another adsorption material; such as a gamma-alumina powder. The resulting mixture can be mixed with water to make a slurry, which can then be wash coated, imbibed, impregnated, physisorbed, chemisorbed, precipitated, or otherwise applied to an entire or substantial portion of the catalyst substrate's surface to form a first layer of adsorption material. The coated catalyst substrate can be calcined, and a catalyst washcoat can be applied to the first adsorption material layer containing silver or barium metal.

Once the catalyst washcoat is applied, the resulting catalyst substrate can have a second layer of adsorption material, including either barium or silver metal, respectively, applied to the entire or substantial portion of the catalyst substrate's surface. Again, the adsorption material can be mixed an organometallic precursor material including either barium or silver metal, respectively. The resulting mixture can be filtered washed, and calcined, and further mixed with another adsorption material such as zeolite or aluminum. The resulting mixture can be mixed with water to make a slurry, which can then be washcoated, imbibed, impregnated, physisorbed, chemisorbed, precipitated, or otherwise applied to an entire or substantial portion of the catalyst washcoat layer on the catalyst substrate to form a second layer of adsorption material.

An alternative method for applying a dual layer scheme to a catalyst substrate comprises using a post impregnation method. For example, an adsorption material, such as zeolite or alumina, can be mixed with water to form a slurry. The resulting slurry can be washcoated, imbibed, impregnated, physisorbed, chemisorbed, precipitated, or otherwise applied to an entire or substantial portion of the catalyst substrate surface to form a layer of adsorption material. A catalyst washcoat can be applied to the adsorption material layer of the catalyst substrate by washcoating, imbibing, impregnating, physisorbing, chemisorbing, precipitating, and the like. An organometallic precursor comprising an organometallic precursor material and either silver or barium can be applied to the treated catalyst substrate by post impregnation. Post impregnation typically involves dipping the catalyst substrate in a solution until forming a layer of the desired thickness. During post impregnation, the adsorption material coated on the treated catalyst substrate will adsorb, for example, a quantity of silver metal. The process can be repeated one or more times until, for example, a sufficient quantity of barium metal is disposed within the layer of adsorption material. The resulting catalyst substrate can be calcined, and then post impregnated a second time until a sufficient quantity of barium is disposed within the layer of adsorption material. Thus, the catalyst substrate will comprise an adsorption material layer containing silver and barium disposed beneath a catalyst washcoat layer.

Disposed concentrically around the catalyst substrate to form a mat support material/catalyst substrate subassembly, is a mat support material that insulates the shell from both high exhaust gas temperatures and the exothermic catalytic reaction occurring within the catalyst substrate. The mat support material further enhances the structural integrity of the catalyst substrate by applying compressive radial forces about it, reducing its axial movement, and retaining it in place. The mat support material can comprise an insulating material such as ceramics, vermiculite, and the like, or other combinations comprising at least one of the foregoing and other conventional materials such as an organic binder. The mat support material can either be a simple non-intumescent ceramic material, or an intumescent material, e.g., one which contains a vermiculite component that expands with heating to maintain firm compression when the shell expands outward from the catalyst substrate, as well as materials which include a combination of both. Typical non-intumescent ceramic materials include ceramic materials such as those sold under the trademark "INTERAM® 1100HT" by the "3M" Company, Minneapolis, Minnesota, or those sold under the trademark, "FIBERFRAX" and "CC-MAX" by the Unifrax Co., Niagara Falls, New York, and the like. Intumescent ceramic materials include ceramic materials such as those sold under the trademark "INTERAM® 100" by the "3M" Company, Minneapolis, Minnesota, as well as those intumescents which are also sold under the aforementioned "FIBERFRAX" trademark, as well as combinations thereof and others.

The mat support material/catalyst substrate subassembly can be concentrically disposed within a catalytic converter shell. The choice of material for the shell depends upon the type of exhaust gas, the maximum temperature of the catalyst substrate, the maximum temperature of the exhaust gas stream, and the like. Suitable materials for the shell can comprise any material that is capable of resisting under-car salt, temperature and corrosion. Typically, ferrous material is employed such as ferritic stainless steels. Ferrous materials, and the like, include the 400-Series such as SS-409, SS-439, and SS-441, with grade SS-409 generally preferred. An endcone, an endplate or an exhaust manifold assembly can be secured to the shell containing the mat support material/catalyst substrate subassembly to complete assembly of the catalytic converter.

Referring now to Figure 1, a catalytic converter 10 comprising a catalyst substrate 12 having a silver/alumina, silver/zeolite, barium/alumina or barium/zeolite layer disposed upon a substantial portion or the entirety of its surface is concentrically disposed within a shell 14, and a mat support material 16 is disposed in between the shell 14 and catalyst substrate 12, and around the catalyst substrate 12. The shell 14 includes at least one end, and an opening for the passage of exhaust gas therethrough. The ends are secured to an endcone 18, and further connected to an exhaust system component (not shown) such as an exhaust manifold assembly, connecting pipe, exhaust pipe, coupling assembly, flexible coupling assembly, mounting flange, or other exhaust system component, and combinations comprising at least one of the foregoing.

As exhaust gas is introduced into the exhaust system, the exhaust gas passes through the exhaust system component and enters the catalytic converter. The exhaust gas containing one or more environmentally unfriendly components, such as nitrogen oxides, hydrocarbons, sulfur oxides, and the like, passes through the catalyst substrate of the catalytic converter. When the catalytic reaction takes place, the adsorption material layer impregnated with the organometallic precursor can react with both the hydrocarbons and nitrogen oxides present in the exhaust gas stream. The organometallic precursors can undergo a reduction reaction with hydrocarbons present in the exhaust gas to form organometallic oxides, as well as nitrogen gas, carbon dioxide and water. These organometallic oxides can be released into the exhaust gas stream, which causes the adsorption material layer to regenerate itself.

For example, a layer of zeolite impregnated with barium metal can adsorb nitrogen oxide present in the exhaust gas stream. The nitrogen oxide is reduced to form barium nitrate, as an intermediary component, trapped within the zeolite layer. A conventional air-fuel sensor, such as a wide range area fuel/nitrogen oxide sensor present in the exhaust system, can detect when NOₓ adsorption ceases, and or regeneration takes place, by monitoring the air-fuel ratio of the exhaust gas stream. When NOₓ adsorption ceases, a lean oxygen rich air-fuel ratio can be introduced to regenerate the zeolite layer containing the trapped intermediary barium nitrate. The trapped barium nitrate is oxidized to form barium oxide, nitrogen gas, carbon dioxide and water, which is released into the exhaust gas exiting the exhaust system. When regeneration is completed, the air-fuel ratio can then be adjusted to a stoichiometric air-fuel ratio.

The exemplary methods for applying the nitrogen oxide catalyst material are further illustrated by the following non-limiting examples.

### Example 1:

About 1,000 grams of 13X zeolite powder and about 105 grams of 19% silver 2-ethyl hexanoate in toluene, and about 200 grams toluene were mixed. The mixture was dried for about 12 hours, and then calcined at about 600°C for about 2 hours to form a zeolite powder containing about 2% by weight of silver, based on the total weight of the powder. About 1,000 grams of the 2% by weight silver on zeolite powder was mixed with about 150 grams of gamma-alumina and about 100 grams of about 25% by weight Disperal Dispersion 25/5 alkaline alumina monohydrate (commercially available from the Condea Vista Company, Houston, Texas). A quantity of water was added to the resulting mixture to make a slurry comprising about 35% solids. The resulting slurry was coated on several oval catalyst substrates, measuring about 3.2 inches by about 5.7 inches by about 3.55 inches, and having about 400 cells/in³ and an average cell wall thickness of about 6.5 mil, and commercially available from Corning, Inc., Corning, New York. A catalyst washcoat loading was applied to about 4.0 g/in³ of each catalyst substrate's surface. The catalyst washcoat coating was calcined on the catalyst substrate at about 400°C for about 4 hours.

### Example 2:

About 1,000 grams CBV-100 zeolite powder, about 230 grams of about 15% barium neodecanate in toluene, and about 200 grams of toluene were mixed. The resulting mixture was dried for about 12 hours, and then calcined at about 300oC for about 6 hours. The process of drying and calcining was repeated 4 times. The resulting zeolite powder comprised about 12% by weight of barium based on the total weight of the zeolite powder. About 1,000 grams of the 12% by weight barium on zeolite powder was mixed with about 150 grams of gamma-alumina and about 100 grams of about 25% by weight Disperal Dispersion 25/5 alkaline alumina monohydrate. A quantity of water was added to the resulting mixture to make a slurry comprising about 35% solids. The resulting slurry was coated on several oval catalyst substrates, each measuring about 3.2 inches by about 5.7 inches by about 3.55 inches, and having about 400 cells/in³ and an average cell wall thickness of about 6.5 mil. The resulting coating was calcined at about 400°C for about 4 hours. A catalyst washcoat loading was applied to about 4.0 g/in³ of each catalyst substrate's surface. The catalyst washcoat was calcined on the catalyst substrate at about 400°C for about 4 hours.

### Comparative Example 3:

About 1,000 grams of 13X zeolite powder and about 185 milliliters (ml) of about 1.0 N silver nitrate solution and about 1,000 ml of water were mixed. The resulting mixture was dried at about 120°C for about 12 hours, and then calcined at about 600°C for about 2 hours to form a zeolite powder containing about 2% by weight of silver, based on the total weight of the powder. About 1,000 grams of the 2% by weight silver on zeolite powder was mixed with about 150 grams of gamma-alumina and about 100 grams of about 25% by weight Disperal Dispersion 25/5 alkaline alumina monohydrate. A quantity of water was added to the resulting mixture to make a slurry comprising about 35% solids. The resulting slurry was coated on several oval catalyst substrates, measuring about 3.2 inches by about 5.7 inches by about 3.55 inches, and having about 400 cells/in³ and an average cell wall thickness of about 6.5 mil. A catalyst washcoat loading was applied to about 4.0 g/in³ of each catalyst substrate's surface. The catalyst washcoat coating was calcined on the catalyst substrate at about 400°C for about 4 hours.

### Example 4:

About 1,000 grams of 13X zeolite powder was mixed with about 150 grams of gamma-alumina and about 100 grams of about 25% by weight Disperal Dispersion 25/5 alkaline alumina monohydrate. A quantity of water was added to the resulting mixture to make a slurry comprising about 35% solids. The resulting slurry was coated on several oval catalyst substrates, measuring about 3.2 inches by about 5.7 inches by about 3.55 inches, and having about 400 cells/in³ and an average cell wall thickness of about 6.5 mil. The resulting coating was calcined on the catalyst substrate at about 600°C for about 4 hours. A catalyst washcoat loading was applied to about 4.0 g/in³ of each catalyst substrate's surface. The resulting washcoated catalyst substrate was post impregnated in a solution comprising about 39 grams of about 19.0% silver 2-ethylhexanoate in about 190 grams of toluene. The resulting coating was calcined at about 600°C for about 4 hours. The resulting adsorption material layer disposed upon the catalyst washcoat layer comprised about 2.0% silver oxide by weight of the adsorption material layer.

### Example 5:

About 1,000 grams of the CBV-100 zeolite powder was mixed with 150 grams of gamma-alumina and about 100 grams of a 25% by weight Disperal Dispersion 25/5 alkaline alumina monohydrate. A quantity of water was added to the resulting mixture to make a slurry comprising about 35% solids. The resulting slurry was coated on several oval catalyst substrates, each measuring about 3.2 inches by about 5.7 inches by about 3.55 inches, and having about 400 cells/in³ and an average cell wall thickness of about 6.5 mil. The resulting coating was calcined on the catalyst substrate at about 400°C for about 4 hours. A catalyst washcoat loading was applied to about 4.0 g/in³ of the catalyst substrate's surface. The resulting washcoated catalyst substrate was post impregnated in a solution comprising about 15.0% barium neodecanate in toluene. The washcoated and impregnated catalyst substrate was calcined at about 300°C. The post impregnation and calcination process was repeated 3 times. The resulting adsorption material layer disposed upon the catalyst washcoat layer comprised about 12% of barium by weight of the adsorption material layer.

### Comparative Example 6:

About 1000 grams of 13X zeolite powder was mixed with about 150 grams of gamma-alumina powder and about 100 grams of 25% by weight Disperal Dispersion 25/5 alkaline alumina monohydrate. A quantity of water was added to the resulting mixture to make a slurry comprising about 35% solids. The resulting slurry was coated on several oval catalyst substrates, measuring about 3.2 inches by about 5.7 inches by about 3.55 inches, and having about 400 cells/in³ and an average cell wall thickness of about 6.5 mil. The resulting coating was calcined at about 400°C for about 4 hours. A washcoat loading was applied to about 4.0 g/in³ of each catalyst substrate's surface. The resulting washcoated catalyst substrate was post impregnated in a solution comprising about 68 ml of about 1.0N silver nitrate, and about 185 grams of water. The resulting coating was calcined at about 600°C for about 4 hours. The resulting adsorption material layer disposed upon the catalyst washcoat layer comprised about 2.0% silver oxide by weight of the adsorption material layer.

**Table 1**

| | Particle Size (in nanometers) | Particle Size (in nanometers) |
|---|---|---|
| Example 1 | 4 - 9 | 10 - 23 |
| Example 3 | 15 - 35 | 74 - 120 |
| ¹Fresh catalyst substrate. | | |
| ² Catalyst substrate aged for 100 hours under a rich/lean air-fuel mixture and thermal cycling conditions. | | |
| ³Fresh catalyst substrate comprising an adsorption material layer having silver oxide derived from 2-ethyl hexanoate. | | |
| ⁴Fresh catalyst substrate comprising an adsorption material layer having silver oxide derived from silver nitrate. | | |

Table 1 illustrates the comparison between the degree of agglomeration experienced by the nitrogen oxide catalyst material of Example 1 in contrast to the degree of agglomeration experienced by the nitrogen oxide catalyst material of Comparative Example 3. The initial particle size of the silver oxide present on the fresh catalyst substrates, prepared according to Example 1 and Comparative Example 3, are indicated in the first column. The particle size of the silver oxide after aging the catalyst substrate for about 100 hours under conventional stoichiometric rich/lean air-fuel ratios and standard thermal cycling conditions are indicated in the second column.

The silver oxide particle size for Example 1 demonstrates the advantages inherent in using a carrier, e.g., an organometallic precursor, to dispose nitrogen oxide catalyst material having a small particle size within the adsorption layers. In contrast, the silver oxide particle size for Comparative Example 3 exemplifies the difference using water as a carrier. The organometallic precursor has a lower surface tension and heat capacity than water, which allows the organometallic precursor to distribute smaller particles of the nitrogen oxide catalyst material than water. In addition, after aging the respective catalyst substrates, the degree of agglomeration experienced by the nitrogen oxide catalyst material of Comparative Example 3 was noticeably larger than that experienced by the nitrogen oxide catalyst material of Example 1. The difference in the degree of agglomeration directly correlates to both the method in which the nitrogen oxide catalyst material was applied to the catalyst substrate, as well as the nitrogen oxide catalyst materials employed, such as the organometallic precursor material and silver and/or barium metal.

The nitrogen oxides catalyst material presents several advantages over existing nitrogen oxides catalyst materials. First, utilizing organic based silver or barium organometallic precursors provides an effective method for uniformly depositing the smallest particles of silver or barium on the catalyst substrate. The silver/alumina layer, silver/zeolite layer, barium/alumina layer, or barium/zeolite layer reduction or decomposition to silver oxide or barium oxide occurs at temperatures of about 150°C. In contrast, conventional materials such as silver chloride, barium chloride, silver nitrate, or barium nitrate alone take place at temperatures of about 600°C, at which point the amount of time to effectively regenerate the nitrogen oxide adsorption material has passed. Calcination reactions, such as those taking place in the exemplary catalyst material, produce smaller particles of silver or barium at lower temperatures on the catalyst substrate's skin or surface. As a result, agglomeration is less likely to occur due to the small particle size.

Second, the nitrogen oxide catalyst material does not employ nitrates, chlorides, sulfur and/or amine components. The present composition, catalyst substrate, and catalytic converter are substantially free of nitrates, chlorides, sulfurs and/or amines, which are environmentally unfriendly components. As a result, the catalyst material catalyzes the nitrogen oxides, and other environmentally unfriendly components present in the exhaust system, without producing potentially harmful by-products.

Third, the method for applying the nitrogen oxide catalyst material employs an organometallic precursor rather than water. The organometallic precursors possess a lower surface tension and heat capacity than water. A solvent, or carrier in this case, having a lower surface tension can effectively "carry" and distribute smaller sized particles than methods employing water to distribute the catalyst material, since the latter methods cannot distribute such finely sized particles to ensure agglomeration is less likely to occur.

Fourth, a catalyst substrate coated with an alumina layer or a zeolite layer provides a better surface area for adhering the silver metal or barium metal. Various conventional methods such as high temperature calcination, gaseous diffusion, impregnation and calcination, and ion exchange techniques that are typically employed to deposit the nitrogen oxide adsorption material on the catalyst substrate can introduce additional time, labor and costs, thus making the process very inefficient. By employing an organometallic precursor as a carrier that also reacts with existing base metal oxides, the alumina layer or zeolite layer acts as an adhesive for the silver or barium metal via the reaction mechanism of silver 2-ethylhexanoate, silver neodecanoate, barium 2-ethyl hexanoate or barium neodecanoate, and the base metal oxides.

Fifth, the catalyst substrate's overall durability is improved by using a self-regenerating catalyst material resistant to agglomeration. Agglomeration can effectively shorten the usefulness of a catalyst substrate as the catalyst material cannot effectively catalyze environmentally unfriendly exhaust gas components while undergoing agglomeration. The catalyst material is resistant to agglomeration. Furthermore, as nitrogen oxides are treated by the catalyst material, the silver/barium reduces to form silver nitrate/barium nitrate, and undergoes further reduction with hydrocarbons to form environmentally harmless silver oxide or barium oxide, as well as nitrogen, carbon monoxide and water.

While preferred embodiments have been shown and described, various modifications and substitutions may be made thereto without departing from the spirit and scope of the invention. Accordingly, it is to be understood that the nitrogen oxide reduction catalyst material, and its catalyst substrate and catalytic converter, have been described by way of illustration and not limitation.

## Claims

1. A catalyst substrate, comprising:
a substrate material comprising a catalyst;
a layer of an adsorption material disposed on said substrate material; and
a layer of an organometallic precursor disposed on said substrate material.

2. The catalyst substrate of Claim 1, wherein said adsorption material further comprises zeolites, inorganic oxides, and combinations comprising at least one of the foregoing adsorption materials.

3. The catalyst substrate of Claim 2, wherein said zeolites further comprise fjiusites, rare-earth exchanged zeolite, large pore zeolite, medium pore zeolite, ultra stable zeolite, de-aluminated zeolite, zeolite beta, zeolite powder, ZSM-3, ZSM-4, ZSM-5, ZSM-12, ZSM-18, ZSM-20, ZSM-23, ZSM-35, ZSM-38, ZSM-48, MCM-22, and combinations comprising at least one of the foregoing zeolites.

4. The catalyst substrate of Claim 2, wherein said inorganic oxides further comprise alumina.

5. The catalyst substrate of Claim 1, wherein said organometallic precursor further comprises an organometallic precursor material and a catalyst material.

6. The catalyst substrate of Claim 5, wherein said organometallic precursor material further comprises napthalenes, tallates, neodecanates, ispropoxides, carboxylic acids and their esters, carboxylates, alkoxycarboxylates, phthalates, alcohols, guanidine, fatty acids, and combinations comprising at least one of the foregoing materials.

7. The catalyst substrate of Claim 5, wherein said carboxylic acid further comprises stearic acid, oleic acid, linolenic acid, hexanoic acid, octanoic acid, neodecanoic acid, and combinations comprising at least one of the foregoing acids.

8. The catalyst substrate of Claim 5, wherein said esters further comprise hexanoates, octanoates, neodecanoates, and combinations comprising at least one of the foregoing esters.

9. The catalyst substrate of Claim 5, wherein said catalyst material further comprises a noble metal, rare earth metal, alkaline earth metal, transition metal, and combinations comprising at least one of the foregoing materials.

10. The catalyst substrate of Claim 9, wherein said catalyst material further comprises silver, barium, and combinations comprising at least one of the foregoing metals.

11. The catalyst substrate of Claim 10, wherein said catalyst material has a particle size of less than about 50 nanometers.

12. The catalyst substrate of Claim 10, wherein said catalyst material has a particles size of less than about 25 nanometers.

13. The catalyst substrate of Claim 10, wherein said catalyst material has a particle size of less than about 15 nanometers.

14. The catalyst substrate of Claim 10, wherein said catalyst material has a particle size of less than about 10 nanometers.

15. The catalyst substrate of Claim 1, further comprising a layer of an organometallic precursor disposed on said adsorption material layer.

16. The catalyst substrate of Claim 1, further comprising a second layer of an organometallic precursor disposed on said first layer of said organometallic precursor.

17. The catalyst substrate of Claim 1, further comprising a layer of adsorption material and organometallic precursor material disposed on said substrate material.

18. A method for manufacturing a catalyst substrate, comprising:
forming a substrate;
applying a catalyst to said substrate;
applying a layer of an adsorption material to said substrate; and
applying a layer of an organometallic precursor to said substrate.

19. The method of Claim 18, wherein said applying further comprises washcoating, imbibing, impregnating, physisorbing, chemisorbing, precipitating, and combinations comprising at least one of the foregoing methods.

20. The method of Claim 18, further comprising applying a second layer of an organometallic precursor to said substrate.

21. The method of Claim 18, further comprising applying a layer of an adsorption material and organometallic precursor to said substrate.

22. The method of Claim 21, wherein said application further comprises mixing said adsorption material and organometallic precursor.

23. The method of Claim 18, wherein said applying said layer of said organometallic precursor further comprises applying an organometallic solution comprising a catalyst material and an organometallic precursor material to said substrate.

24. The method of Claim 18, wherein said application further comprises applying one or more adsorption materials selected from the group consisting of fjiusites, rare-earth exchanged zeolite, large pore zeolite, medium pore zeolite, ultra stable zeolite, de-aluminated zeolite, zeolite beta, zeolite powder, ZSM-3, ZSM-4, ZSM-5, ZSM-12, ZSM-18, ZSM-20, ZSM-23, ZSM-35, ZSM-38, ZSM-48, MCM-22, alumina, and combinations comprising at least one of the foregoing materials.

25. The method of Claim 18, wherein said application further comprises applying one or more organometallic precursors comprising an organometallic precursor material and a catalyst material, wherein said organometallic precursor material is selected from the group consisting of napthalenes, tallates, neodecanates, isopropoxides, carboxylic acids and their esters, carboxylates, alkoxycarboxylates, phthalates, alcohols, guanidine, fatty acids, and combinations comprising at least one of the foregoing materials, wherein said catalyst material is selected from the group consisting of noble metals, rare earth metals, alkaline earth metals, transition metals, and combinations comprising at least one of the foregoing catalyst materials.

26. The method of Claim 25, wherein said carboxylic acid is selected from the group consisting of stearic acid, oleic acid, linolenic acid, hexanoic acid, octanoic acid, neodecanoic acid, and combinations comprising at least one of the foregoing acids.

27. The method of Claim 25, wherein said ester is selected from the group consisting of hexanoates, octanoates, neodecanoates, and combinations comprising at least one of the foregoing esters.

28. A catalytic converter, comprising:
a catalyst substrate (12) comprising a catalyst, and an organometallic precursor disposed in an adorption material;
a shell (14) having at least one end, and concentrically disposed about said catalyst substrate (12); and
a mat support material (16) disposed concentrically in between said catalyst substrate (12) and said shell (14), and around said catalyst substrate (12).

29. The catalytic converter of Claim 28, wherein said adsorption material further comprises zeolites, inorganic oxides, and combinations comprising at least one of the foregoing adsorption materials.

30. The catalytic converter of Claim 29, wherein said zeolites further comprise fjiusites, rare-earth exchanged zeolite, large pore zeolite, medium pore zeolite, ultra stable zeolite, de-aluminated zeolite, zeolite beta, zeolite powder, ZSM-3, ZSM-4, ZSM-5, ZSM-12, ZSM-18, ZSM-20, ZSM-23, ZSM-35, ZSM-38, ZSM-48, MCM-22, and combinations comprising at least one of the foregoing zeolites.

31. The catalytic converter of Claim 29, wherein said organometallic precursor further comprises an organometallic precursor material and a catalyst material, wherein said organometallic precursor further comprises napthalenes, tallates, neodecanates, isopropoxides, carboxylic acids and their esters, carboxylates, alkoxycarboxylates, phthalates, alcohols, guanidine, fatty acids, and combinations comprising at least one of the foregoing materials, wherein said catalyst material further comprises noble metals, rare earth metals, alkaline earth metals, transition metals, and combinations comprising at least one of the foregoing catalyst materials.

32. The catalytic converter of Claim 31, wherein said carboxylic acid further comprises stearic acid, oleic acid, linolenic acid, hexanoic acid, octanoic acid, neodecanoic acid, and combinations comprising at least one of the foregoing acids.

33. The catalyst substrate of Claim 31, wherein said esters further comprise hexanoates, octanoates, neodecanoates, and combinations comprising at least one of the foregoing esters.

34. A method for treating exhaust gas, comprising:
introducing exhaust gas to a catalytic converter assembly (10) comprising a shell (14) concentrically disposed about a mat support material (16) which is concentrically disposed about a catalyst substrate (12) comprising a catalyst, an adsorption material, and an organometallic precursor;
passing the exhaust gas through said catalytic converter (10);
catalytically treating one or more constituents in the exhaust gas.

35. The method of Claim 34, further comprising catalytically treating said one or more constituents in the exhaust gas using said organometallic precursor.

36. The method of Claim 34, further comprising forming an organometallic oxide from said catalytic treatment of said one or more constituents.

37. The method of Claim 36, further comprising regenerating said adsorption material.
